# EUROPÄISCHE PATENTSCHRIFT

(11) **EP 2 667 073 B1**
(45) Veröffentlichungstag und Bekanntmachung des Hinweises auf die Patenterteilung: **08.11.2017**
(21) Anmeldenummer: 12168763.6
(22) Anmeldetag: 21.05.2012
(51) Int. Cl.: F16L 43/00, F16L 9/17, B21D 39/02, B21D 9/03

(54) **Rohrstück aus Metallblech, Verfahren zu dessen Herstellung und Verfahren zur Herstellung eines Rohrbogens**
Pipe section made of sheet metal, method for producing the same and method for producing a pipe elbow
Pièce de tuyau à base de tôles de métal, son procédé de fabrication et procédé de fabrication d'un coude de tube

(43) Veröffentlichungstag der Anmeldung: 27.11.2013
(73) Patentinhaber: Zambelli Fertigungs GmbH & Co. KG, 94481 Grafenau (DE)
(72) Erfinder: Zambelli Sopalú, Franz, 94481 Grafenau (DE)
(74) Vertreter: Henkel, Breuer & Partner

(56) Entgegenhaltungen:
- EP-A1- 0 668 114
- EP-A1- 2 384 844
- WO-A2-2009/126677
- DE-U1- 20 301 781
- DE-U1-202005 015 519
- US-A- 1 718 983
- US-A- 6 155 091

## Beschreibung

Die vorliegende Erfindung bezieht sich auf ein Rohrstück aus Metallblech und ein Verfahren zu dessen Herstellung, insbesondere zur Verwendung als Regenrinnenrohr und als Ausgangsmaterial zur Herstellung von Regenrinnenablaufbögen, sowie auf ein Verfahren zur Herstellung eines Rohrbogens aus einem Rohrstück unter Einsatz einer Streck-Biegevorrichtung. Rohrstücke aus Metallblech, die insbesondere als Regenrinnenrohre verwendet werden, sind bekannt. Üblicherweise wird zu deren Herstellung ein ebener Blechmaterialzuschnitt in eine geschlossene Hohl-Zylinderform umgeformt und gegenüberliegende Längs-Randabschnitte des Blechmaterialzuschnitts werden entweder auf Stoß zusammengefügt oder flach übereinandergelegt und in Längsrichtung miteinander verschweißt. Ein Problem solcher Schweißverbindungen besteht darin, dass bei Verwendung von oberflächenbeschichtetem Blechmaterial, beispielsweise verzinktem oder lackiertem Blechmaterial, die Oberflächenbeschichtung durch die Hitzeeinwirkung beim Schweißvorgang zumindest im Bereich der Schweißnaht zerstört wird und das Rohrmaterial an diesen Stellen nicht mehr korrosionsgeschützt ist. Wenn die Korrosion vermieden werden soll, ist zumindest eine Nachbearbeitung in Form von Lackierung oder nachträglicher Verzinkung erforderlich, was aufwändig ist und die Kosten der Herstellung erhöht.

Um das Problem der Zerstörung der Oberflächenbeschichtung durch Hitzeeinwirkung beim Schweißvorgang zu vermeiden, ist auch vorgeschlagen worden, die einander gegenüberliegenden Längs-Randabschnitte des Blechmaterialzuschnitts jeweils haken- bzw. taschenförmig auszubilden und diese Bereich mechanisch miteinander in Eingriff zu bringen, um eine formschlüssige mechanische Verbindung der einander gegenüberliegenden Längsränder des zu einer zylindrischen Rohrform verformten Blechmaterialzuschnitts herzustellen.

Ein solches Rohrmaterial und ein Verfahren zur Herstellung eines Regenrinnenablaufbogens aus Metallblech ist beispielsweise in der DE 202005015519 U1 beschrieben. Ein Nachteil dieses Verbindungsverfahrens besteht darin, dass das In-Eingriff-Bringen der haken- bzw. taschenförmigen Endabschnitte nur schwierig oder gar nicht zu automatisieren ist und eine einfache rein mechanische Verbindung dieser Art unter Umständen nicht ausreichend flüssigkeitsdicht und steif ist. Diese Druckschrift beschreibt auch das Zurücksetzen des durch eine mechanische Verbindung gebildeten Falzes, wobei das Zurücksetzen aber dadurch erreicht wird, dass der eine Endabschnitt des Endbereiches bereits bei der Ausbildung der Tasche zurückgesetzt wird. Dies macht das mechanische In-Eingriff-Bringen des hakenartig gebogenen gegenüberliegenden Endes in das vertiefte taschenartige Ende problematisch. Diese Druckschrift beschreibt außerdem das Umformen eines geraden hohl-zylinderförmigen Rohrstücks aus Blechmaterial durch Streckbiegen zu einem Regenrinnenablaufbogen.

Aus der US 1718983 A ist ein Rohrstück aus Metallblech sowie ein Verfahren zu dessen Herstellung bekannt, bei dem Längs-Randabschnitte eines Blechmaterialzuschnitts ein- oder beidseitig mit einer durchgehenden Rändelung versehen werden, die Längs-Randabschnitte jeweils zu einer Hakenform abgebogen werden und nach Umformung des Blechmaterialzuschnitts in eine geschlossene Hohl-Zylinderform miteinander verhakt werden, wobei dieser Verbindungsbereich gegenüber der Mantelfläche zurückgesetzt wird.

Aus der DE 20301781 U1 ist ein gewalztes Rohr aus einem oberflächenbehandelten Metallstreifen bekannt, das an seinen beiden gegenüberliegenden Längsrandabschnitten jeweils einen Hakenabschnitt aufweist und die beiden Hakenabschnitte miteinander verhakt und flach zusammengewalzt werden, wobei die Hakenabschnitte vorab mit einer Schicht eines Klebers bedeckt werden.

Die üblicherweise für das Streckbiegen von Hohlkörpern aus Metallblech verwendete Rohrbiegemaschine besitzt eine Biegerolle, ein Klemmstück zum Andrücken des Rohrstücks an die Biegerolle und einen rundzylindrischen Dorn, auf welchen das im Ausgangszustand gerade Rohrstück aufgesteckt wird. Die EP 0106030 A1 beschreibt eine solche Rohrbiegemaschine. Ein Nachteil bei der Verwendung einer solchen Rohrbiegemaschine bzw. Streck-Biegevorrichtung besteht darin, dass nach innen vorstehende Schweißgrate oder Falze des in eine Rohrform geformten Blechmaterials es erfordern, dass zwischen dem Außendurchmesser des Dorns und dem Innenumfang des Klemmstücks ein relativ großer Zwischenraum besteht, damit ein ungehindertes Aufsetzen des Rohrstücks auf den Dorn möglich ist. Dies führt allerdings beim Streckbiegen dazu, dass sich das Blechmaterial beidseitig des Grats bzw. Falzes wellenartig verformen kann. Außerdem ist der Verschleiß von Klemmstück und Dorn aufgrund der Relativbewegung von Werkzeug und Werkstück verhältnismäßig hoch.
Die Aufgabe der Erfindung besteht darin, zumindest einige der oben genannten Probleme zu lösen.

Zur Lösung bringt die vorliegende Erfindung ein Rohrstück aus Metallblech gemäß Patentanspruch 1, ein Verfahren zum Herstellen eines Rohrstücks aus Metallblech gemäß Patentanspruch 4 und ein Verfahren zur Herstellung eines Rohrbogens aus einem geraden Rohrstück gemäß Patentanspruch 9 in Vorschlag. Bevorzugte Ausgestaltungen des jeweiligen Gegenstandes bzw. Verfahrens sind in den abhängigen Patentansprüchen angegeben.

Das erfindungsgemäße Rohrstück aus Metallblech zeichnet sich im Wesentlichen dadurch aus, dass es aus einem ebenen Blechmaterialzuschnitt in einer geschlossenen Hohl-Zylinderform geformt ist. Die gegenüber der Hauptfläche des Blechmaterialzuschnitt abgebogenen gegenüberliegenden Längs-Randabschnitte des Blechmaterialzuschnitts überlappen einander in Längsrichtung. In dem Überlappungsbereich ist eine Schweiß- oder Klebeverbindung vorgesehen und der Überlappungsbereich ist in der Art eines Falzes so umgebogen, dass zumindest derjenige Abschnitt des Überlappungsbereichs, der die Schweiß- oder Klebeverbindung aufweist, sowohl zur Außenseite als auch zur Außenseite der Hohl-Zylinderform von jeweils mindestens einer Lage bzw. einem Bereich des Blechmaterialzuschnitts überdeckt ist.

Diese Ausgestaltung hat den Vorteil, dass durch die außen- und innenseitige Überlagerung des Überlappungsbereichs zum einen eine zuverlässig dichte Verbindung in Form eines mehrfach gewundenen Labyrinths bereits durch die mechanische Verbindung als Falz hergestellt ist. Obwohl in dem Überlappungsbereich eine Schweiß- oder Klebeverbindung vorgesehen ist bzw. wird, wodurch die Dichtigkeit und die Festigkeit der Verbindung im Bereich des Falzes noch weiter verbessert werden, aber durch die Hitzeeinwirkung des Schweißvorgangs eine gegebenenfalls vorhandene Oberflächenbeschichtung des Blechmaterials lokal entfernt oder beschädigt ist, ist dieser Teil des Überlappungsbereichs jedoch stets zur Außenseite und zur Innenseite des Rohrstücks von einem nicht der Hitze ausgesetzten und daher unversehrten Bereich des Blechmaterialzuschnitts abgedeckt, so dass weder durch Regenwasser oder durch andere Umwelteinflüsse eine direkte Einwirkung auf die Bereiche des Materials im Falz ohne Oberflächenbeschichtung gegeben ist.

Außerdem besitzt die Verbindung aufgrund der mehrfachen Faltung aber insbesondere auch aufgrund der zusätzlich vorgesehenen Schweißverbindung und der Umformung eine extrem hohe Festigkeit und Widerstandsfähigkeit gegenüber, mechanischer Beanspruchung.

Das erfindungsgemäß vorgeschlagene Verfahren zur Herstellung eines solchen Rohrstücks aus Metallblech umfasst zunächst das Abbiegen von gegenüberliegenden Längs-Randabschnitten eines ebenen Blechmaterialzuschnitts aus der Hauptfläche des Blechmaterialzuschnitts, der vorzugsweise ein- oder beidseitig mit einer korrosionshemmenden Beschichtung versehen ist. Anschließend wird der Blechmaterialzuschnitt zu einer geschlossenen Hohl-Zylinderform umgeformt, die rund-zylindrisch aber auch rechteck-zylindrisch sein kann, bis die abgebogenen Längs-Randabschnitte einander überlappen. Dann wird an dieser Stelle der Überlappung eine Schweiß- oder Klebeverbindung in Längsrichtung des Rohrstücks hergestellt. Anschließend wird der Überlappungsbereich so umgebogen, dass ein Falz gebildet wird, bei dem zumindest ein Abschnitt des Überlappungsbereichs, der die Schweiß- oder Klebeverbindung aufweist, und der deshalb möglicherweise eine lokal beschädigte Oberflächenbeschichtung aufweist, sowohl zur Außenseite als auch zur Innenseite der Hohl-Zylinderform von mindestens einer Lage des Blechmaterialzuschnitts überdeckt ist.

Die für das erfindungsgemäße Verfahren verwendete Streck-Biegevorrichtung zur Herstellung eines Rohrbogens aus einem erfindungsgemäß hergestellten Rohrstück gemäß vorstehender Beschreibung, ist in an sich bekannter Weise ausgebildet, wobei aber der Dorn, auf den das durch Streck-Biegen umzuformende Rohrstück aufzusetzen ist, mit einer Aussparung in Längsrichtung versehen ist, die den Falz des Rohstücks aufnimmt. Diese Gestaltung bietet den Vorteil, dass der Zwischenraum zwischen der Außenumfangsfläche des Dorns und der Innenumfangsfläche des Klemmstücks verhältnismäßig eng bemessen werden kann, weil der an der Innenumfangsfläche erhabene Falz des Rohrstücks in der Ausnehmung oder Nut des Dorns liegt. Das verhindert eine Wellenbildung auf beiden Seiten des Falzes und führt zu einem erheblich verringerten Abrieb im Bereich des Falzes, weil die Kontaktfläche in diesem Bereich verringert ist. Das reduziert den Verschleiß der Streck-Ziehwerkzeuge erheblich und verhindert außerdem eine Beschädigung der Oberflächenbeschichtung des Rohrstücks beim Streck-Biegevorgang.

Außerdem wird durch die Aussparung bzw. Nut in dem Dorn der Falz geführt und ein vollflächiges Auflegen sowohl des Dorns an der Rohrbogeninnenseite sowie der Innenumfangsfläche des Klemmstücks an der Rohrbogenaußenseite ist gewährleistet.

Im Folgenden wird die Erfindung anhand beigefügter schematischer Zeichnungen erläutert. Es zeigen:
Figur 1a bis 1e ein erfindungsgemäßes Rohrstück aus Metallblech und die typischen Ablaufschritte zur Herstellung des Verbindungsfalzes,
Figur 1f das Detail A der Fig. 1a in vergrößerter Darstellung,
Figur 1g das Detail C der Fig. 1e in vergrößerter Darstellung,
Figur 2a bis 2c eine Ausführungsform eines nicht erfindungsgemäßen Rohrstücks mit einer anderen Abfolge von Herstellungsschritten des Falzes,
Figur 2d das Detail B der Fig. 2a in vergrößerter Darstellung,
Figur 3 eine Frontansicht der bei dem erfindungsgemäßen Verfahren verwendeten Streck-Biegevorrichtung mit Biegerolle, Klemmstück und Dorn,
Figur 4 die Einzelheit A der Figur 3 in vergrößerter Darstellung, und
Figur 5 einen Dorn der Streck-Biegevorrichtung in Vorderansicht und Draufsicht.

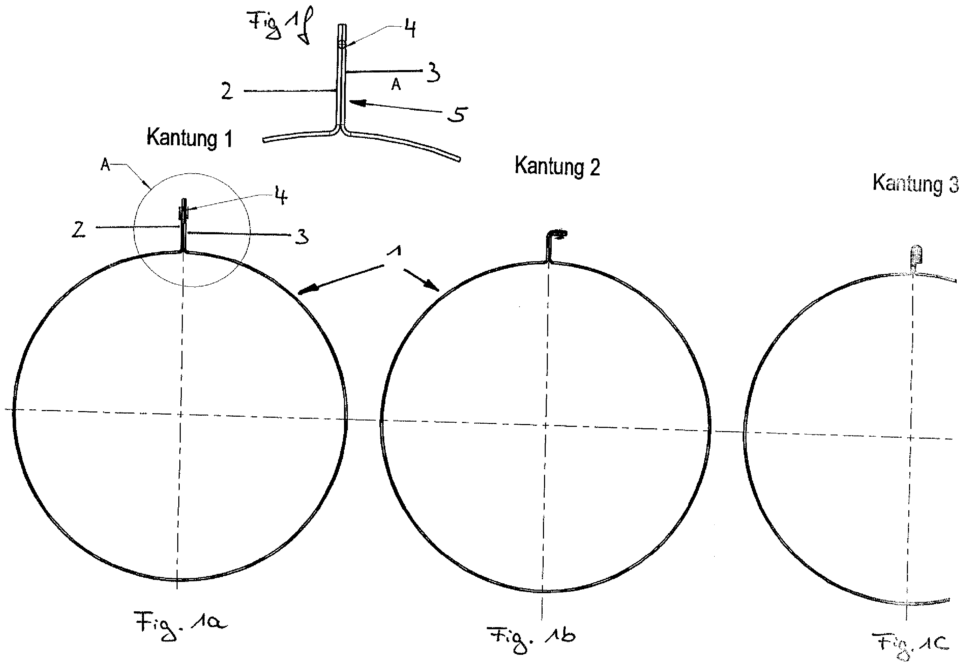

Das erfindungsgemäße Rohrstück 1 ist aus Metallblech durch Umformen hergestellt. Eine beispielhafte Abfolge von Herstellungsschritten ist in den Fig. 1a bis 1e dargestellt. Als Ausgangsmaterial dient ein einzelner Zuschnitt aus einem Blechmaterial, beispielsweise Stahlblech, das vorzugsweise einseitig, noch besser beidseitig oberflächenbeschichtet ist, beispielsweise mit einem korrosionshemmenden Material wie Zink oder Lack. Derartiges oberflächenbeschichtetes Blechmaterial zur Herstellung von Regenrinnenrohren ist bekannt und ist erheblich kostengünstiger als Vollmaterial aus einem korrosionsgeschützten Material wie Edelstahl, Kupfer, Aluminium. Nachteilig bei diesem Material ist allerdings, dass eine lokale Beschädigung der Oberflächenbeschichtung, beispielsweise durch Wärmeeinwirkung bei der Herstellung von Schweißverbindungen oder aber auch durch Reibung aufeinander gleitender Flächen beim Umformen oder durch starke Biegebeanspruchung im Bereich eines Falzes zu einer Korrosion des Blechmaterials führt.

Der ebene Zuschnitt aus Blechmaterial wird zunächst an den gegenüberliegenden Längs-Randabschnitten 2,3 von der Hauptfläche des Blechmaterialzuschnitts etwa rechtwinkelig und in gleicher Richtung abgebogen. Dann wird der Blechmaterialzuschnitt zu einer geschlossenen Hohl-Zylinderform umgeformt, derart, dass die abgebogenen Längs-Randabschnitte 2,3 flächig aufeinander liegen und einander überlappen. In diesem Überlappungsbereich 5 wird dann eine Füge- bzw. Schweiß- oder Klebeverbindung 4 in Längsrichtung des Rohrstücks hergestellt. Die Schweißverbindung kann durch Rollenschweißen oder Punktschweißen oder durch Schweißen mit länglichen Elektroden in an sich bekannter Weise erfolgen. Die Schweißverbindung wird allerdings nur in einer radial außen liegenden Zone des Überlappungsbereichs 5 ausgeführt, so dass die radial weiter innen liegende Zone des Überlappungsbereichs 5 keine Schweißverbindung aufweist. Dadurch bleibt eine durch die Hitzeeinwirkung beim Schweißen auftretende Beschädigung der Oberflächenbeschichtung auf diese äußere Zone begrenzt. Die Beschädigung kann dabei an den einander zugewandten Seiten des Überlappungsbereichs 5 aber auch an den voneinander abgewandten Seiten auftreten.

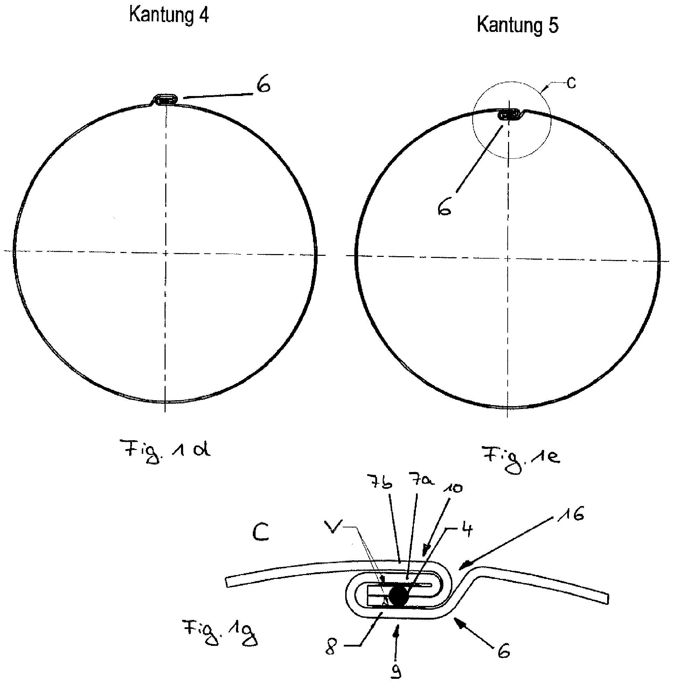

In den nächsten Schritten, die in den Fig. 1b bis 1d angedeutet sind, wird der Überlappungsbereich 5 in mehreren weiteren Abkantungen derart umgebogen, dass ein Falz 6 gebildet wird, bei dem zumindest ein Abschnitt 9 des Überlappungsbereichs 5, der die Schweißverbindung 4 und damit die u.U. beschädigten Oberflächenbereiche aufweist, zur Außenseite und zur Innenseite der Hohl-Zylinderform von jeweils mindestens einer Lage 7,8 des nicht durch die Hitzeeinwirkung beim Schweißen beeinträchtigten und daher unversehrten Blechmaterials überdeckt ist. Da gemäß Fig. 1a die Schweißverbindung nur in dem äußeren Endabschnitt 9 des Überlappungsbereichs 5 ausgebildet wird, wird dieser nach dem zweimaligen Umbiegen um 90 Grad etwa an der Mittellinie und parallel zur Schweißnaht (siehe Figuren 1b und 1c) des Überlappungsbereichs und dem anschließenden Umbiegen des ganzen Überlappungsbereichs auf die Außen-Zylinderfläche des Rohrstücks (siehe Figur 1d) zur Außenseite von einem anderen Abschnitt 10 des Überlappungsbereichs 5, in dem keine Schweißverbindung ausgebildet ist, und damit von zwei im Hinblick auf die Oberflächenbeschichtung unversehrten Lagen 7a und 7b des Blechmaterials überdeckt, während er zur Innenseite des Rohrstücks von dem ebenfalls unversehrten Abschnitt 8 des Blechmaterials überdeckt wird (siehe Figur 1g).

Der so gebildete Falz 6, der noch an der Außenseite des hohlzylinderförmigen Rohrstücks vorsteht, wird anschließend so zur Innenseite durchgesetzt, dass das Rohrstück 1 an der Außenseite eine im Wesentlichen (d.h. bis auf die durch die Durchsetzung gebildete Nut 16 kontinuierliche stufenlose Mantelfläche besitzt (siehe Figuren 1e und 1g). Dabei werden die übereinander liegenden Lagen des Blechmaterials nochmals dicht aufeinander gedrückt.

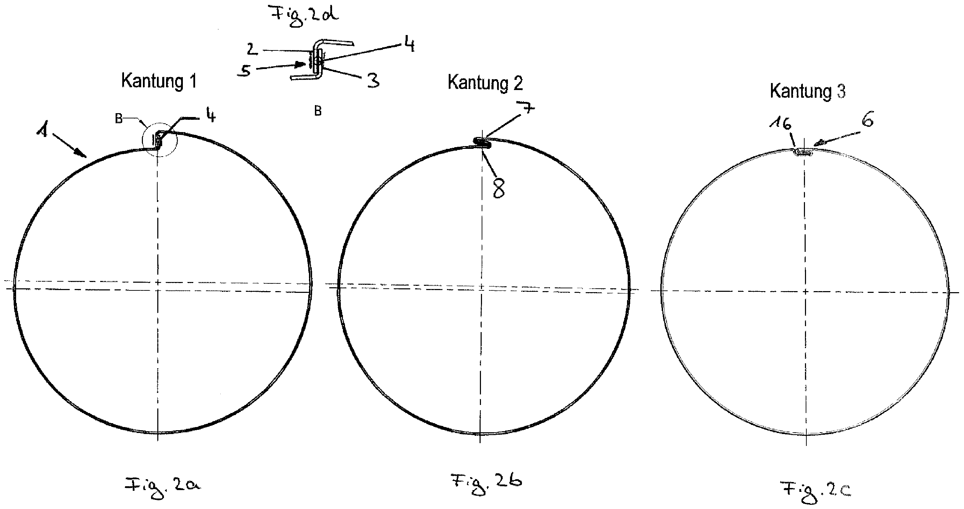

Bei der in der Folge der Figuren 2a bis 2c gezeigten alternativen Ausführungsform eines nicht erfindungsgemäßen Verfahrens wird ebenfalls ein Falz 6 gebildet, bei dem ggf. durch Hitzeeinwirkung beschädigte Bereiche einer Schweißnaht an der Außenseite und an der Innenseite des Rohrstücks jeweils von einer unversehrten Lage des Blechmaterials überdeckt sind. Anders als bei dem Verfahren nach den Figuren 1a bis 1d werden hier die parallelen gegenüberliegenden Längs-Randabschnitte 2,3 des ebenen Blechmaterialzuschnitts von der Ebene des Blechmaterialzuschnitts in entgegengesetzten Richtung abgebogen. Nach dem Umformen des Blechmaterialzuschnitts zu der geschlossenen Hohl-Zylinderform werden die abgebogenen Randabschnitte 2,3 in gegenseitigen formschlüssigen Eingriff gebracht, um den Überlappungsbereich 5 zu bilden. Die Zylinderform ist in dieser Phase noch nicht exakt rund sondern in vertikaler Richtung gestreckt, wie in Figur 2a gezeigt ist, bleibt aber ohne weitere Haltevorrichtungen in der zylindrischen Form. In dieser Phase wird ggf. in dem Überlappungsbereich 5 etwa mittig eine Schweiß- oder Klebeverbindung in Längsrichtung des Rohrstücks ausgebildet (siehe Figur 2d).

Anschließend wird der Überlappungsbereich an den Abkantungen der Randabschnitte um eine etwa mittig durch den Überlappungssteg verlaufende Längsachse herum weiter gedreht und abgekantet, wodurch der Überlappungsbereich selbst nicht verformt wird (siehe Figur 2b). Dabei legen sich die ggf. durch die Hitzeeinwirkung beim Schweißen beschädigten außenliegenden Flächen des Überlappungsbereichs an die unversehrten Innenumfangs- bzw. Außenumfangsflächen des zylinderförmigen Blechmaterials an und werden durch diese vollständig abgedeckt. Gleichzeitig wird die Streckung des Zylinders in vertikaler Richtung aufgehoben und das Rohrstück einer nahezu runden Querschnittform angenähert. Abschließend wird gemäß Figur 2c der so gebildete Falz 6 auch zur Innenseite durchgesetzt, damit das Rohrstück 1 auch bei dieser Ausführungsform an der Außenseite eine im Wesentlichen (d.h. bis auf die durch die Durchsetzung gebildete Nut 16) kontinuierliche stufenlose Mantelfläche besitzt.

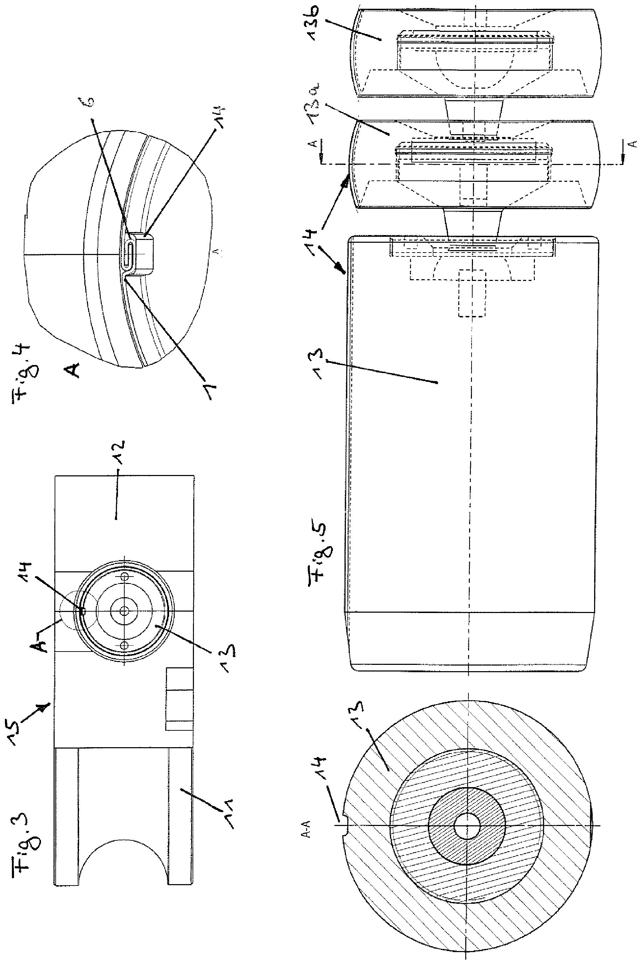

Die Figuren 3 bis 5 zeigen eine bei dem erfindungsgemäßen Verfahren verwendete verbesserte Streck-Biegevorrichtung 15 zur Herstellung eines Rohrbogens aus einem Rohrstück 1, welches beispielsweise nach einem der zuvor erläuterten erfindungsgemäßen Verfahren aus einem Blechmaterialzuschnitt gebildet wurde, oder aber auch auf andere Weise hergestellt sein kann, sofern es im Verbindungsbereich einen an der Innenumfangsfläche in Längsrichtung verlaufenden Grat, beispielsweise von einer Schweißnaht, oder einen Falz aufweist.

Die Streck-Biegevorrichtung 15 besitzt in an sich bekannter Weise eine Biegerolle 11, ein Klemmstück 12 zum Andrücken des Rohrstücks 1 an die Biegerolle 11 und einen Dorn 13, auf welchen das Rohrstück 1 aufsteckbar ist. Das in der Vorrichtung festgeklemmte Rohrstück wird dann durch Rotation des Klemmstücks 12 mit der Biegerolle 11 um eine Biegeachse auf den Radius der Biegerolle gebogen.

Im Stand der Technik war zwischen dem Außenumfang des Biegedorns und dem Innenumfang des Klemmstücks ein relativ großer Zwischenraum erforderlich, um den Grat bzw. Falz aufzunehmen. Das führte allerdings zu einer wellenartigen Verformung der Zylinderfläche beiderseits des Grates bzw. Falzes und zu hohem Verschleiß des Werkzeuges durch Abrieb an den Kontaktflächen von Werkzeug und Werkstück.

Erfindungsgemäß ist nun der Dorn 13 mit einer den Falz 6 bzw. Grat des Rohrstücks 1 aufnehmenden Aussparung 14 in seinem Außenumfang versehen, in der der Falz gleiten kann. Durch die Ausnehmung oder Nut 14 wird der Falz beim Streck-Biegevorgang geführt und ein vollflächiges Aufliegen des Dorns an der Bogen-Innenseite und der Schale des Klemmstücks an der Bogen-Außenseite ist gewährleistet, weil der Zwischenraum zwischen Dorn und Klemmstück kleiner sein kann wie im Stand der Technik. Dabei wird ein Abrieb der Oberflächenbeschichtung insbesondere im Bereich des Falzes durch die verringerte Flächenpressung vermieden oder zumindest erheblich reduziert, wodurch es möglich wird, oberflächenbeschichtetes Blechmaterial überhaupt und ggf. ein solches mit vergleichsweise dünner Beschichtung zu verwenden, ohne dass die Gefahr einer Beschädigung der Beschichtung besteht.

Eine weitere Reduzierung der Reibung und des Verschleißes des Werkzeuges kann erreicht werden, indem Bereiche des Klemmstücks 12 und/oder des Dorns 13 der Streck-Biegevorrichtung 15, die mit dem zu verformenden Rohrstück 1 in Kontakt kommen, zumindest teilweise eine Kupferlegierung, vorzugsweise eine Messinglegierung aufweisen oder ganz oder zumindest bereichsweise aus einer Kupferlegierung, vorzugsweise einer Messinglegierung gefertigt sind.

Um der Rotation und Biegung um den Radius der Biegerolle folgen zu können ist der Dorn 13 an seinem Endabschnitt in mehrere axiale Segmente 13a, 13b unterteilt (siehe Figur 5), die miteinander beweglich verbunden sind. Die Ausnehmung oder Nut 14 für den Falz oder Grat erstreckt sich dabei über alle Segmente. Um Rohrstücke mit mehreren Graten bzw. Falzen in Längsrichtung Streck-Biegen zu können, kann der Dorn auch mehrere Ausnehmungen an entsprechender Stelle aufweisen.

## Patentansprüche

1. Rohrstück (1) aus Metallblech, wobei
das Rohrstück (1) aus einem ebenen Blechmaterialzuschnitt in einer geschlossenen Hohl-Zylinderform geformt ist, derart, dass gegenüberliegende abgebogene Längs-Randabschnitte (2,3) des Blechmaterialzuschnitts einander in Längsrichtung des Rohrstücks (1) überlappen und einen Überlappungsbereich (5) bilden, in dem Überlappungsbereich (5) eine Schweiß- oder Klebeverbindung (4) vorgesehen ist, und der Überlappungsbereich (5) in einem Falz (6) so umgebogen ist, dass zumindest ein Abschnitt (9) des Überlappungsbereichs (5), der die Schweiß- oder Klebeverbindung (4) aufweist, zur Außenseite und zur Innenseite der Hohl-Zylinderform von jeweils mindestens einer Lage (7,8) des Blechmaterialzuschnitts überdeckt ist, **dadurch gekennzeichnet, dass** der Abschnitt (9) des Überlappungsbereichs (5), der die Schweiß- oder Klebeverbindung (4) aufweist, zur Außenseite der Hohl-Zylinderform von einem anderen Abschnitt (10) des Überlappungsbereichs (5) ohne Schweiß- oder Klebeverbindung überdeckt ist.

2. Rohrstück (1) aus Metallblech gemäß Anspruch 1, wobei der Falz (6), der den Überlappungsbereich (5) umfasst, so zur Innenseite der Hohl-Zylinderform durchgesetzt ist, dass das Rohrstück (1) an der Außenseite eine im Wesentlichen kontinuierliche und stufenlose Mantelfläche besitzt.

3. Rohrstück (1) aus Metallblech gemäß Anspruch 1 oder 2, wobei der Blechmaterialzuschnitt aus einem zumindest einseitig oberflächenbeschichteten Material gebildet ist.

4. Verfahren zum Herstellen eines Rohrstücks (1) aus Metallblech nach einem der Ansprüche 1 bis 3, mit den Schritten:
Abbiegen von gegenüberliegenden Längs-Randabschnitten (2,3) eines ebenen Blechmaterialzuschnitts, ,
Umformen des Blechmaterialzuschnitts zu einer geschlossenen Hohl-Zylinderform, derart, dass die abgebogenen Längs-Randabschnitte (2,3) einander überlappen und einen Überlappungsbereich (5) bilden,
Herstellen einer Schweiß- oder Klebeverbindung (4) in dem Überlappungsbereich (5) in Längsrichtung des Rohrstücks,
Umbiegen des Überlappungsbereichs (5) derart, dass ein Falz (6) gebildet wird, bei dem zumindest ein Abschnitt (9) des Überlappungsbereichs (5), der die Schweiß- oder Klebeverbindung (4) aufweist, zur Außenseite und zur Innenseite der Hohl-Zylinderform von jeweils mindestens einer Lage (7,8) des Blechmaterialzuschnitts überdeckt ist.

5. Verfahren zum Herstellen eines Rohrstücks (1) aus Metallblech gemäß Anspruch 4, wobei die gegenüberliegenden Längs-Randabschnitte (2,3) des ebenen Blechmaterialzuschnitts von der Ebene des Blechmaterialzuschnitts in derselben Richtung abgebogen werden.

6. Verfahren zum Herstellen eines Rohrstücks (1) aus Metallblech gemäß Anspruch 4 oder 5, wobei die Schweiß- oder Klebeverbindung (4) nur in dem einen Abschnitt (9) des Überlappungsbereichs (5) ausgebildet wird, und dieser Abschnitt (9) des Überlappungsbereichs (5) mit der Schweiß- oder Klebeverbindung (4) so umgebogen wird, dass er zur Außenseite der Hohl-Zylinderform von einem anderen Abschnitt (10) des Überlappungsbereichs (5), in dem keine Schweiß- oder Klebeverbindung ausgebildet ist, überdeckt wird.

7. Verfahren zum Herstellen eines Rohrstücks (1) aus Metallblech gemäß einem der Ansprüche 4 bis 6, wobei der Falz (6) so zur Innenseite der Hohl-Zylinderform durchgesetzt wird, dass das Rohrstück (1) an der Außenseite eine im Wesentlichen kontinuierliche und stufenlose Mantelfläche besitzt.

8. Verfahren zum Herstellen eines Rohrstücks (1) aus Metallblech gemäß einem der Ansprüche 4 bis 7, wobei der zum Abbiegen verwendete Blechmaterialzuschnitt aus einem zumindest einseitig oberflächenbeschichteten, vorzugsweise mit einem wärmeempfindlichen korossionshemmenden Material wie Zink oder Lack, Blechmaterial gebildet ist.

9. Verfahren zur Herstellung eines Rohrbogens aus einem geraden Rohrstück (1), mit den Schritten:
Verwenden eines Rohrstücks (1) gemäß einem der Ansprüche 1 bis 3 oder Herstellen eines Rohrstücks (1) nach dem Verfahren zum Herstellen eines Rohrstücks gemäß dem Verfahren nach einem der Ansprüche 4 bis 8 aus einem Blechmaterialzuschnitt,
Einlegen des Rohrstücks (1) in eine Streck-Biegevorrichtung (15), die eine Biegerolle (11), ein Klemmstück (12) zum Andrücken des Rohrstücks (1) an die Biegerolle (11) und einen Dorn (13), auf welchen das Rohrstück (1) aufsteckbar ist, besitzt, wobei das Klemmstück (12) mit der Biegerolle (11) um eine Biegeachse rotierbar ist, und der Dorn (13) eine den Falz (6) des Rohrstücks (1) aufnehmende Aussparung (14) in seinem Außenumfang aufweist, derart, dass der Falz (6) des Rohrstücks (1) in der Aussparung (14) des Kerns (13) aufgenommen und das Rohrstück (1) durch das Klemmstück (12) fixiert wird, und
Umformen des Rohrstücks (1) zum Rohrbogen durch Rotieren des Klemmstücks (12) mit der Biegerolle (11) um die Biegeachse.

10. Verfahren zur Herstellung eines Rohrbogens gemäß Anspruch 9, wobei bei der verwendeten Streck-Biegevorrichtung (15) Bereiche des Klemmstücks (12) und/oder des Dorns (13) der Streck-Biegevorrichtung (15), die mit dem zu verformenden Rohrstück (1) in Kontakt kommen, zumindest teilweise eine Kupferlegierung, vorzugsweise eine Messinglegierung aufweisen.

11. Verfahren zur Herstellung eines Rohrbogens gemäß Anspruch 10, wobei das Klemmstück (12) und der Dorn (13) zumindest bereichsweise aus einer Kupferlegierung, vorzugsweise einer Messinglegierung gefertigt sind.

12. Verfahren zur Herstellung eines Rohrbogens gemäß Anspruch 10 oder 11, wobei der Dorn (13) an seinem Endabschnitt mehrere axiale Segmente (13a,13b) aufweist, die miteinander beweglich verbunden sind.

## Claims

1. Pipe section (1) of sheet metal, wherein the pipe section (1) is formed from a planar sheet material blank into a closed hollow cylindrical shape in such a way that opposite bent-off longitudinal edge portions (2, 3) of the sheet material blank overlap one another in the longitudinal direction of the pipe section (1) and form an overlapping region (5), a welded or adhesive connection (4) is provided in the overlapping region (5), and the overlapping region (5) is bent over into a seam (6) such that at least one portion (9) of the overlapping region (5) which has the welded or adhesive connection (4) is covered to the outer side and to the inner side of the hollow cylindrical shape by in each case at least one layer (7, 8) of the sheet material blank, **characterized in that** the portion (9) of the overlapping region (5) which has the welded or adhesive connection (4) is covered to the outer side of the hollow cylindrical shape by another portion (10) of the overlapping region (5) without a welded or adhesive connection.

2. Pipe section (1) of sheet metal according to Claim 1, wherein the seam (6) which comprises the overlapping region (5) is pushed through towards the inner side of the hollow cylindrical shape such that the pipe section (1) has on the outer side a substantially continuous and stepless lateral surface.

3. Pipe section (1) of sheet metal according to Claim 1 or 2, wherein the sheet material blank is formed from a material which is surface-coated at least on one side.

4. Method for producing a pipe section (1) of sheet metal according to one of Claims 1 to 3, comprising the following steps:
bending off opposite longitudinal edge portions (2, 3) of a planar sheet material blank,
forming the sheet material blank into a closed hollow cylindrical shape in such a way that the bent-off longitudinal edge portions (2, 3) overlap one another and form an overlapping region (5),
producing a welded or adhesive connection (4) in the overlapping region (5) in the longitudinal direction of the pipe section,
bending over the overlapping region (5) in such a way that a seam (6) is formed, in which seam at least one portion (9) of the overlapping region (5) which has the welded or adhesive connection (4) is covered to the outer side and to the inner side of the hollow cylindrical shape by in each case at least one layer (7, 8) of the sheet material blank.

5. Method for producing a pipe section (1) of sheet metal according to Claim 4, wherein the opposite longitudinal edge portions (2, 3) of the planar sheet material blank are bent off from the plane of the sheet material blank in the same direction.

6. Method for producing a pipe section (1) of sheet metal according to Claim 4 or 5, wherein the welded or adhesive connection (4) is formed only in one portion (9) of the overlapping region (5), and this portion (9) of the overlapping region (5) with the welded or adhesive connection (4) is bent over such that it is covered to the outer side of the hollow cylindrical shape by another portion (10) of the overlapping region (5) in which no welded or adhesive connection is formed.

7. Method for producing a pipe section (1) of sheet metal according to one of Claims 4 to 6, wherein the seam (6) is pushed through towards the inner side of the hollow cylindrical shape such that the pipe section (1) has on the outer side a substantially continuous and stepless lateral surface.

8. Method for producing a pipe section (1) of sheet metal according to one of Claims 4 to 7, wherein the sheet material blank used for bending off is formed from a material which is surface-coated at least on one side, preferably with a heat-sensitive corrosion-inhibiting material such as zinc or varnish, sheet material.

9. Method for producing a pipe elbow from a straight pipe section (1) comprising the following steps:
using a pipe section (1) according to one of Claims 1 to 3 or producing a pipe section (1) according to the method for producing a pipe section according to the method according to one of Claims 4 to 8 from a sheet material blank,
inserting the pipe section (1) into a stretching-bending device (15) which has a bending roller (11), a clamping piece (12) for pressing the pipe section (1) onto the bending roller (11), and a mandrel (13) onto which the pipe section (1) can be plugged, wherein the clamping piece (12) together with the bending roller (11) can be rotated about a bending axis, and the mandrel (13) has in its outer circumference a recess (14) which receives the seam (6) of the pipe section (1) in such a way that the seam (6) of the pipe section (1) is received in the recess (14) of the core (13) and the pipe section (1) is fixed by the clamping piece (12), and
forming the pipe section (1) into the pipe elbow by rotating the clamping piece (12) together with the bending roller (11) about the bending axis.

10. Method for producing a pipe elbow according to Claim 9, wherein, in the case of the stretching-bending device (15) which is used, regions of the clamping piece (12) and/or of the mandrel (13) of the stretching-bending device (15) which come into contact with the pipe section (1) to be deformed have at least partially a copper alloy, preferably a brass alloy.

11. Method for producing a pipe elbow according to Claim 10, wherein the clamping piece (12) and the mandrel (13) are manufactured at least in certain regions from a copper alloy, preferably a brass alloy.

12. Method for producing a pipe elbow according to Claim 10 or 11, wherein the mandrel (13) has at its end portion a plurality of axial segments (13a, 13b) which are movably connected to one another.

## Revendications

1. Pièce (1) tubulaire en tôle métallique, dans laquelle
la pièce (1) tubulaire étant conformée en une forme de cylindre fermé à partir d'un flan plan en matériau de tôle, de manière à ce que des segments (2, 3) de bord longitudinal opposés coudés du flan en matériau de tôle, se chevauchent dans la direction longitudinale de la pièce (1) tubulaire et forment une région (5) de chevauchement, une soudure ou un collage (4) étant prévu dans la région (5) de chevauchement, et la région (5) de chevauchement étant coudée suivant un pli (6), de manière à ce qu'au moins un segment (9) de la région (5) de chevauchement, qui a la soudure ou le collage (4), soit, vers la face extérieure et vers la face intérieure de la forme en cylindre creux, recouvert d'au moins une couche (7, 8) du flan en matériau de tôle,
**caractérisée en ce que**
le segment (9) de la région (5) de chevauchement, qui a la soudure ou le collage (4), est, vers la face extérieure de la forme en cylindre creux, recouvert d'un autre segment (10) de la région (5) de chevauchement, sans soudure ni collage.

2. Pièce (1) tubulaire en tôle métallique suivant la revendication 1, dans laquelle le pli (6), qui entoure la région (5) de chevauchement, est cintré vers la face intérieure de la forme en cylindre creux, de sorte que la pièce (1) tubulaire a, sur la face extérieure, une surface latérale sensiblement continue et sans gradin.

3. Pièce (1) tubulaire en tôle métallique suivant la revendication 1 ou 2, dans laquelle le flan en matériau de tôle est en un matériau revêtu en surface au moins d'un côté.

4. Procédé de fabrication d'une pièce (1) tubulaire en tôle métallique suivant l'une des revendications 1 à 3, comprenant les stades :
courbure de segments (2, 3) de bord longitudinal opposés, d'un flan plan en matériau de tôle,
reformation du flan en matériau de tôle en une forme de cylindre creux fermé, de manière à ce que les segments (2, 3) de bord longitudinal courbés se chevauchent et forment une région (5) de chevauchement,
production d'une soudure ou d'un collage (4) dans la région (5) de chevauchement, dans la direction longitudinale de la pièce tubulaire,
pliage de la région (5) de chevauchement, de manière à former un pli (6), dans lequel au moins un segment (9) de la région (5) de chevauchement, qui a la soudure ou le collage (4), soit, sur la face extérieure et sur la face intérieure de la forme en cylindre creux, recouvert de respectivement au moins une couche (7, 8) du flan en matériau de tôle.

5. Procédé de fabrication d'une pièce (1) tubulaire en tôle métallique suivant la revendication 4, dans lequel on coude dans la même direction les segments (2, 3) de bord longitudinal opposés du flan plan de matériau de tôle à partir du plan du flan en matériau de tôle.

6. Procédé de fabrication d'une pièce (1) tubulaire en tôle métallique suivant la revendication 4 ou 5, dans lequel on ne forme la soudure ou le collage que dans un segment (9) de la région (5) de chevauchement et on coude ce segment (9) de la région (5) de chevauchement, ayant la soudure ou le collage (4), de manière à ce qu'il soit, vers la face extérieure de la forme en cylindre creux, recouvert d'un autre segment (10) de la région (5) de chevauchement, dans lequel il n'est pas formé de soudure ou de collage.

7. Procédé de fabrication d'une pièce (1) tubulaire en tôle métallique suivant l'une des revendications 4 à 6, dans lequel le pli est cintré vers la face intérieure de la forme en cylindre creux, de manière à ce que la pièce (1) tubulaire ait, sur la face extérieure, une surface latérale sensiblement continue et sans gradin.

8. Procédé de fabrication d'une pièce (1) tubulaire en tôle métallique suivant l'une des revendications 4 à 7, dans lequel le flan de matériau de tôle utilisé pour la courbure est en un matériau de tôle revêtu en surface, au moins d'un côté, de préférence en un matériau sensible à la chaleur et anticorrosion, comme du zinc ou du vernis.

9. Procédé de fabrication d'un coude de tuyau à partir d'une pièce (1) tubulaire droite, comprenant les stades :
utilisation d'une pièce (1) tubulaire suivant l'une des revendications 1 à 3 ou fabrication d'une pièce (1) tubulaire suivant le procédé de fabrication d'une pièce tubulaire suivant le procédé selon l'une des revendications 4 à 8, à partir d'un flan en matériau de tôle,
insertion de la pièce (1) tubulaire dans un dispositif (15) d'étirage-cintrage, qui a un rouleau (11) de cintrage et un mandrin (13) sur lequel la pièce (1) tubulaire peut être enfilée, la pièce (12) de serrage pouvant tourner avec le rouleau (11) de cintrage, autour d'un axe de cintrage, et le mandrin (13) ayant dans son pourtour extérieur un évidement (14) recevant le pli (6) de la pièce (1) tubulaire, de manière à ce que le pli (6) de la pièce (1) tubulaire soit reçu dans l'évidement (14) du noyau (13) et que la pièce (1) tubulaire soit immobilisée par la pièce (12) de serrage et
reformation de la pièce (1) tubulaire coude de tuyau, par rotation de la pièce (12) de serrage, avec le rouleau (11) de cintrage, autour de l'axe de cintrage.

10. Procédé de fabrication d'un coude de tuyau suivant la revendication 9,
dans lequel, dans le dispositif (15) d'étirage-cintrage, qui est utilisé, des parties de la pièce (12) de serrage et/ou du mandrin (13) du dispositif (15) d'étirage-cintrage, qui viennent en contact avec la pièce (1) tubulaire à déformer, ont au moins en partie un alliage de cuivre, de préférence un alliage de laiton.

11. Procédé de fabrication d'un coude de tuyau suivant la revendication 10,
dans lequel la pièce (12) de serrage et le mandrin (13) sont fabriqués, au moins par endroit, en un alliage de cuivre, de préférence en un alliage de laiton.

12. Procédé de fabrication d'un coude de tuyau suivant la revendication 10 ou 11,
dans lequel le mandrin (13) a, sur son tronçon d'extrémité, plusieurs segments (13a, 13b) axiaux, qui sont reliés de manière mobile entre eux.
